# EUROPEAN PATENT APPLICATION

(11) **EP 4 729 381 A1**
(43) Date of publication of application: **22.04.2026**
(21) Application number: 24831358.7
(22) Date of filing: 28.03.2024
(51) Int. Cl.: B60W 10/08, B60W 10/26, B60W 20/00

(54) **STRADDLED VEHICLE**

(30) Priority: 27.06.2023 WO PCT/JP2023/023818
(71) Applicant: Yamaha Hatsudoki Kabushiki Kaisha, Iwata-shi, Shizuoka 438-8501 (JP)
(72) Inventor: HINO, Haruyoshi, Iwata-shi, Shizuoka 438-8501 (JP)
(74) Representative: Hersina, Günter
(86) International application number: PCT/JP2024/012759
(87) International publication number: WO 2025/004482

(57) **Abstract**

An objective of the present teaching is to increase the degree of freedom in assist control while reducing deterioration of the service life of a lead-acid battery in a straddled vehicle. A straddled vehicle includes a lead-acid battery and a control device. The lead-acid battery is a high-charge-acceptance lead-acid battery that has higher charge acceptance performance than a standard automotive lead-acid battery. The control device controls the motoring and the electric power generation of the fixed-field starter generator such that, when the crankshaft rotation assist control that causes the motoring of the fixed-field starter generator using electric power discharged from the high-charge-acceptance lead-acid battery and the electric power generation control that charges the high-charge-acceptance lead-acid battery using electric power generated through rotation of the permanent magnets caused by the crankshaft are each executed multiple times in a period during which the crank shaft is rotating, a level of charge of the high-charge-acceptance lead-acid battery remains within an operating range that exceeds 50% and encompasses values below 80%.

## Description

### Technical Field

The present teaching relates to a straddled vehicle.

### Background Art

As an example of a straddled vehicle, Patent Literature (PTL) 1 discloses a motorcycle. The motorcycle disclosed in PTL 1 includes a battery, a starter generator, and a control device. The starter generator is coupled to a crankshaft of an engine and is used to start the engine. Furthermore, the starter generator generates electric power through rotation thereof caused by the crankshaft. The battery is a lead-acid battery. The control device executes an engine start control, an assist control, and an electric power generation control. The engine start control is a control to start the engine by causing motoring of the starter generator using electric power discharged from the lead-acid battery. The assist control is a control to apply torque in a rotation direction of the crankshaft of the engine in combustion operation by causing the motoring of the starter generator using electric power discharged from the lead-acid battery. Under the electric power generation control, the starter generator receives torque from the crankshaft and generates electric power to charge the lead-acid battery.

For another example, PTL 2 also discloses a motorcycle including a battery, a starter generator, and a control device. The control device disclosed in PTL 2 performs a start operation and an assist operation. PTL 2 discloses voltage control in a situation in which a lithium-ion battery is connected as the battery (see FIG. 6 in PTL 2) and voltage control in a situation in which a lead-acid battery is connected as the battery (see FIG. 8 in PTL 2).

### Citation List

### Patent Literature

[PTL 1] Japanese Patent No. 5857624
[PTL 2] Japanese Patent Application Laid-Open Publication No. 2020-131934

### Summary of Invention

### Technical Problem

It is often desired in a straddled vehicle to have the capability of increasing either or both of the number of motor assists and the assist force, while achieving downsizing of components for use in the assist operation, and thus achieving vehicle body downsizing while also reducing deterioration of the service life of the lead-acid battery. In other words, it is often desired in a straddled vehicle to have the possibility of achieving an increase in the degree of freedom in assist control while achieving vehicle body downsizing, and while also reducing deterioration of the service life of the lead-acid battery.

An objective of the present teaching is to increase the degree of freedom in assist control while achieving vehicle body downsizing, and while also reducing deterioration of the service life of a lead-acid battery in a straddled vehicle.

### Solution to the Problem

The inventor of the present teaching considered ways to increase the degree of freedom in assist control while achieving vehicle body downsizing, and while also reducing deterioration of the service life of a lead-acid battery.

The inventor of the present teaching has found that increasing the number of motor assists or the assist force in a situation in which assist and charging are repeated in the configuration disclosed in PTL 1, for example, may lead to deterioration of the service life of the lead-acid battery.

The electric power that is outputted from the lead-acid battery comes from electric energy stored in the lead-acid battery during prior electric power generation by the starter generator.

In a straddled vehicle, which makes a turn with a rider's weight shift, achieving vehicle body downsizing is desired, while being equipped with a fixed-field starter generator, which is smaller than an alternator mounted in, for example, an automobile. The fixed-field starter generator is a permanent magnet starter generator. In the fixed-field starter generator, a rotor including permanent magnets is configured to rotate while the crankshaft is rotating. Consequently, as the crankshaft rotates at higher speeds, the permanent magnets also rotate at higher speeds, and the fixed-field starter generator can generate a larger amount of electric power. By contrast, a battery for storing electric energy, which in other words is a standard automotive lead-acid battery that is typically used to start the engine of a straddled vehicle, has lower charge acceptance performance than electric power output performance. The electric power generated by the fixed-field starter generator may therefore be excessive relative to the charge acceptance performance of the standard automotive lead-acid battery. The excessive electric power generated by the fixed-field starter generator is not used for charging but is instead wasted, for example, as heat or through electrolyte vaporization. As the number of motor assists or the assist force increases, therefore, a situation in which the next motor assist is executed before charging compensates for an amount of electric power discharged during assist occurs more frequently, causing the level of charge of the standard automotive lead-acid battery to continue decreasing. As a result of using the standard automotive lead-acid battery in a low-charge-level state, the service life thereof tends to deteriorate.

For example, PTL 2 discloses that the level of charge is controlled with a target of 100% in a case where a lead-acid battery, which is a standard automotive lead-acid battery, is used, and a graph in PTL 2 shows a range of from 80% to 100% as the range for controlling the level of charge. This is because, due to the lower charge acceptance performance of the standard automotive lead-acid battery, allowing a low-charge-level state is likely to cause a situation in which ensuing charging control is not enough to restore the level of charge, and the level of charge continues to decrease.

PTL 2 discloses, for example, a range of 40% to 60% with 50% as the median, as a range of levels of charge less than 80%. However, in PTL 2, the range of levels of charge less than 80% is only applied in a case where a lithium-ion battery is mounted. A reason for this is that the lithium-ion battery has the characteristic of achieving longer service life by being charged in such a way as to avoid a fully charged state (see, for example, [0022] in PTL 2). Another reason is that the lithium-ion battery disclosed in PTL 2 retains available charging capacity for the purpose of generating braking force by being charged with regenerative electric power generated at various points in time.

Lithium-ion batteries have higher charge acceptance performance than standard automotive lead-acid batteries. However, lithium-ion batteries are required to be used in such a way as to avoid a fully charged state. Furthermore, lithium-ion batteries generally exhibit lower output current characteristics than standard automotive lead-acid batteries having a comparable capacity. Some vehicles having an assist function and equipped with a lithium-ion battery are therefore equipped with, for example, a lead-acid battery in addition to the lithium-ion battery. Mounting both a lithium-ion battery and a lead-acid battery in a straddled vehicle results in upsizing of the vehicle body thereof.

In order to accept a larger amount of electric power generated by a fixed-field starter generator, the inventor of the present teaching considered adopting a high-charge-acceptance lead-acid battery, which is a lead-acid battery having higher charge acceptance performance than a standard automotive lead-acid battery. The high-charge-acceptance lead-acid battery is, for example, a charge-controlled vehicle lead-acid battery or a start-stop vehicle lead-acid battery.

Charge-controlled vehicle lead-acid batteries are disclosed, for example, on web pages "Batteries for charge-controlled vehicles" and "Batteries for start-stop vehicles" at "https://gyb.gs-yuasa.com/products/". Start-stop vehicle lead-acid batteries are, for example, defined in Japanese Industrial Standard JIS D 5306:2021. Charge-controlled vehicle lead-acid batteries and start-stop vehicle lead-acid batteries are also disclosed in, for example, literatures such as Japanese Patent Application Laid-Open Publication No. 2013-134957, Japanese Patent Application Laid-Open Publication No. 2014-192079, and Japanese Patent Application Laid-Open Publication No. 2016-058238.

By employing a high-charge-acceptance lead-acid battery for the charging with a large amount of electric power generated by the fixed-field starter generator including magnets adopted for downsizing, it is possible to increase charging current to be supplied to the high-charge-acceptance lead-acid battery that has been discharged for a motor assist. That is, the high-charge-acceptance lead-acid battery allows for highly efficient use of electric power generated by the fixed-field starter generator and is rechargeable within a shorter period of time. For example, the level of charge of the high-charge-acceptance lead-acid battery that has been discharged for a motor assist tends to be restored within a shorter period of time. Even if the high-charge-acceptance lead-acid battery is discharged to a level of charge less than 80%, for example, the level of charge can be restored within a short charging period. It is therefore possible to increase the number of motor assists or the assist force. Consequently, it is possible to expand the adjustable range of the number of motor assists or the assist force, or the adjustable ranges of both the number of motor assists and the assist force.

However, some assist and charging tests using a combination of a fixed-field starter generator and a high-charge-acceptance lead-acid battery conducted by the inventor of the present teaching under conditions simulating actual traveling showed deterioration of the service life of the high-charge-acceptance lead-acid battery.

The inventor of the present teaching carried out additional studies and found that the internal resistance of the high-charge-acceptance lead-acid battery can be higher than that of a standard automotive lead-acid battery having an equal capacity. The inventor of the present teaching carried out more detailed studies and found that in a case where the level of charge of the high-charge-acceptance lead-acid battery is 50% or less, the internal resistance thereof can be higher than that of a standard automotive lead-acid battery having an equal capacity and an equal level of charge to those of the high-charge-acceptance lead-acid battery.

The inventor of the present teaching therefore considered controlling motoring and electric power generation of the fixed-field starter generator such that the level of charge of the high-charge-acceptance lead-acid battery remains within an operating range that exceeds 50% and compasses values below 80%. This allows the charge acceptance performance of the high-charge-acceptance lead-acid battery to be higher than the charge acceptance performance of a standard automotive lead-acid battery having a comparable capacity. Thus, it is possible to reduce deterioration of the service life of the high-charge-acceptance lead-acid battery.

As described above, the inventor of the present teaching considered charging a high-charge-acceptance lead-acid battery using electric power generated by a fixed-field starter generator, and controlling motoring and electric power generation of the fixed-field starter generator such that the level of charge of the high-charge-acceptance lead-acid battery remains within an operating range that exceeds 50% and encompasses values below 80%. In this case, the high-charge-acceptance lead-acid battery can accept a large amount of electric power generated by the fixed-field starter generator, which has no field winding and is smaller in size, without a lithium-ion battery, for example, and restore the level of charge within a short period of time. Furthermore, the high-charge-acceptance lead-acid battery can discharge to a level of charge in the range of less than 80%, allowing the fixed-field starter generator to perform an assist operation with strong assist force or frequent activation without a dedicated assist motor. It is therefore possible to increase the degree of freedom in assist control while achieving vehicle body downsizing, and while also reducing deterioration of the service life of the high-charge-acceptance lead-acid battery.

Based on the findings described above, a straddled vehicle according to each aspect of the present teaching has the following configuration.
(1) A straddled vehicle including:
   a lead-acid battery;
   an engine having a crankshaft and configured to cause rotation of the crankshaft through combustion operation;
   a starter generator configured to start the engine by causing rotation of the crankshaft of the engine and to generate electric power through rotation thereof caused by the crankshaft; and
   a control device provided in an electrical path that electrically connects the lead-acid battery and the starter generator, and configured to execute at least an engine start control, a crankshaft rotation assist control, and an electric power generation control, the engine start control being a control to start the engine by causing motoring of the starter generator using electric power discharged from the lead-acid battery and applying torque to the crankshaft in a period during which the engine is not in combustion operation, the crankshaft rotation assist control being a control to apply torque in a rotation direction of the rotating crankshaft by causing the motoring of the starter generator using electric power discharged from the lead-acid battery while the engine is in combustion operation, the electric power generation control being a control to cause the starter generator that is receiving torque from the crankshaft to generate electric power for charging the lead-acid battery, wherein
   the starter generator is a fixed-field starter generator coupled to the crankshaft at a fixed reduction ratio without a clutch therebetween or fixed to the crankshaft without a clutch therebetween, having a rotor including permanent magnets and configured to rotate while the crankshaft is rotating, and tending to generate an excessive amount of electric power while the crankshaft is rotating in comparison to variable-field generators,
   the lead-acid battery is a high-charge-acceptance lead-acid battery that has charge acceptance performance comparable to that of either charge-controlled vehicle lead-acid batteries or start-stop vehicle lead-acid batteries, either of which being designed to be charged with electric power generated under control by varying a magnetic field of variable-field generators, so as to be capable of accepting electric power generated by the fixed-field starter generator, which tends to generate an excessive amount of electric power while the crankshaft is rotating, and
   the control device controls the motoring and the electric power generation of the fixed-field starter generator such that, when the crankshaft rotation assist control that causes the motoring of the fixed-field starter generator using electric power discharged from the high-charge-acceptance lead-acid battery and the electric power generation control that charges the high-charge-acceptance lead-acid battery using electric power generated through rotation of the permanent magnets caused by the crankshaft are each executed multiple times in a period during which the engine is in combustion operation, a level of charge of the high-charge-acceptance lead-acid battery remains within an operating range that exceeds 50% and encompasses values below 80%.

The straddled vehicle described in (1) includes an engine, a lead-acid battery, a starter generator, and a control device. The lead-acid battery is a high-charge-acceptance lead-acid battery.

The starter generator is a fixed-field starter generator that generates a magnetic field using permanent magnets. The fixed-field starter generator is smaller in size than, for example, variable-field generators such as alternators, which have field windings. The fixed-field starter generator is used for both the electric power generation control and the crankshaft rotation assist control. This configuration is therefore smaller in size than, for example, a configuration including a dedicated assist motor in addition to the generator. However, the fixed-field starter generator tends to generate an excessive amount of electric power while the engine is in combustion operation and the straddled vehicle is traveling as compared with, for example, variable-field generators such as alternators, in which the magnetic field can be controlled and varied using currents flowing through the field windings.

The high-charge-acceptance lead-acid battery is a battery that has charge acceptance performance comparable to charge-controlled vehicle lead-acid batteries or start-stop vehicle lead-acid batteries. It should be noted here that the charge-controlled vehicle lead-acid batteries or the start-stop vehicle lead-acid batteries are designed to be charged with electric power generated under control by varying magnetic field of variable-field generators. The high-charge-acceptance lead-acid battery achieves a reduction in wasted electric power from the electric power generated by the fixed-field starter generator. Because of the charge acceptance performance comparable to that of the charge-controlled vehicle lead-acid batteries or the start-stop vehicle lead-acid batteries, the high-charge-acceptance lead-acid battery can accept and store a large amount of electric energy resulting from the electric power generation by the fixed-field starter generator. This configuration enables vehicle body downsizing as compared with, for example, a configuration including a lithium-ion battery for accepting a large amount of current separately from a standard automotive lead-acid battery.

In the crankshaft rotation assist control, the control device applies torque in the rotation direction of the crankshaft by causing the motoring of the fixed-field starter generator using electric power discharged from the high-charge-acceptance lead-acid battery. In the electric power generation control, the control device causes the fixed-field starter generator receiving torque from the crankshaft to generate electric power for charging the lead-acid battery. The control device, which is provided in an electrical path that electrically connects the high-charge-acceptance lead-acid battery with the fixed-field starter generator, executes each of the crankshaft rotation assist control and the electric power generation control multiple times.

By employing the high-charge-acceptance lead-acid battery for the charging with a large amount of electric power generated by the fixed-field starter generator, it is possible to increase the charging current to be supplied to the high-charge-acceptance lead-acid battery that has been discharged for a motor assist. That is, the high-charge-acceptance lead-acid battery is rechargeable within a shorter period of time. For example, the high-charge-acceptance lead-acid battery that has been discharged for a motor assist is rechargeable within a shorter period of time. It is therefore possible to increase the number of motor assists or the assist force.

Furthermore, the control device controls the motoring and the electric power generation of the fixed-field starter generator in such a manner so as to keep the level of charge of the high-charge-acceptance lead-acid battery within the operating range, in a situation in which the crankshaft rotation assist control to cause the motoring of the fixed-field starter generator using electric power discharged from the high-charge-acceptance lead-acid battery and the electric power generation control to charge the high-charge-acceptance lead-acid battery using electric power generated through rotation of the permanent magnets are each executed multiple times. The operating range herein is a range of levels of charge greater than 50%. That is, the control device controls the motoring and the electric power generation so as to keep the level of charge from dropping to 50% or less. Furthermore, the operating range includes a range less than 80%.

The configuration described in (1) allows the charge acceptance performance of the high-charge-acceptance lead-acid battery, which is charged using electric power generated by the fixed-field starter generator, to be higher than the charge acceptance performance of a standard automotive lead-acid battery having a comparable capacity.

By employing the high-charge-acceptance lead-acid battery for the charging with a large amount of electric power generated by the fixed-field starter generator, it is possible to reduce a portion of a large amount of electric power generated by the fixed-field starter generator that would have been wasted as heat or the like and to increase charging current to be supplied to the high-charge-acceptance lead-acid battery that has been discharged for a motor assist. That is, the high-charge-acceptance lead-acid battery allows for highly efficient use of electric power generated by the fixed-field starter generator and is rechargeable within a shorter period of time. Even if the high-charge-acceptance lead-acid battery is discharged to a level of charge less than 80%, for example, the level of charge can be restored within a short period of time. It is therefore possible to increase the number of motor assists or the assist force. Consequently, it is possible to expand the adjustable range of the number of motor assists or the assist force, or the adjustable ranges of both the number of motor assists and the assist force.

Furthermore, the control device controls the motoring and the electric power generation of the fixed-field starter generator in such a manner so as to keep the level of charge of the high-charge-acceptance lead-acid battery within the operating range that exceeds 50%. This allows the charge acceptance performance of the high-charge-acceptance lead-acid battery to be higher than the charge acceptance performance of a standard automotive lead-acid battery having a comparable capacity. Thus, it is possible to reduce deterioration of the service life of the high-charge-acceptance lead-acid battery.

Thus, according to the configuration described in (1), the high-charge-acceptance lead-acid battery can accept a large amount of electric power generated by the fixed-field starter generator, which has no field winding and is smaller in size, without the need to add a lithium-ion battery, for example, and restore the level of charge within a short period of time. Furthermore, the high-charge-acceptance lead-acid battery can be discharged to a level of charge less than 80%, allowing the fixed-field starter generator to perform an assist operation with strong assist force or frequent activation without a dedicated assist motor. It is therefore possible to increase the degree of freedom in assist control while achieving downsizing of the vehicle body of the straddled vehicle, and while also reducing deterioration of the service life of the high-charge-acceptance lead-acid battery.

(2) The straddled vehicle described in (1), wherein
the high-charge-acceptance lead-acid battery has a specific charge-discharge characteristic,
the specific charge-discharge characteristic is that an amount of electric charge accumulated through the following steps is greater than 200 As × the rated capacity / 5 Ah: a step where the high-charge-acceptance lead-acid battery in a fully charged state is discharged at a 10-hour rate current until an amount of electric charge equal to the rated capacity of the high-charge-acceptance lead-acid battery is discharged; subsequently, a step where the high-charge-acceptance lead-acid battery is charged at the 10-hour rate current with an amount of electric charge equal to 70% of the rated capacity × the rated capacity / 5 Ah; subsequently, a step where the high-charge-acceptance lead-acid battery is left at rest for 20 hours; and subsequently, a step where the high-charge-acceptance lead-acid battery is, for 60 seconds, charged at a 1/3-hour rate current under 25°C conditions, and
the control device controls the motoring and the electric power generation of the fixed-field starter generator such that, when the crankshaft rotation assist control and the electric power generation control are each executed multiple times, the level of charge of the high-charge-acceptance lead-acid battery having the specific charge-discharge characteristic remains within the operating range that exceeds 50% and encompasses values below 80%.

According to the configuration described in (2), for example, it is possible to easily select a high-charge-acceptance lead-acid battery capable of increasing either or both of the number of motor assists and the assist force, using, as a criterion, the characteristic based on the accumulated amount of electric charge obtained by the specific measurement method described above. Furthermore, by controlling the motoring and the electric power generation of the fixed-field starter generator so that the high-charge-acceptance lead-acid battery selected based on this measurement method is used such that the level of charge remains within the operating range that exceeds 50% and encompasses values below 80%, it is possible to increase the degree of freedom in assist control while reducing deterioration of the service life of the high-charge-acceptance lead-acid battery.

(3) The straddled vehicle described in (1) or (2), wherein
the fixed-field starter generator includes a stator that has a stator core having a plurality of slots and windings disposed through the slots, the stator core having a plurality of teeth arranged at intervals in a circumferential direction of the fixed-field starter generator,
the rotor has a plurality of magnetic pole portions formed by the permanent magnets, and
the number of the plurality of magnetic pole portions is greater than the number of the plurality of teeth.

According to the configuration described in (3), an angular velocity with respect to the rotation speed of the rotor is higher than in a configuration in which the number of magnetic pole portions is less than the number of teeth. The angular velocity is a rate of change of electrical angle, which is defined based on the periodic repetition of the magnetic pole portions. The windings exhibit higher impedance at a higher angular velocity. The angular velocity further increases with an increase in the rotation speed of the rotor. The impedance of the windings interferes with current flowing through the windings. Excessive current output from the fixed-field starter generator is therefore reduced by the high impedance of the windings, whereas the induced voltage increases with an increase in the rotation speed of the rotor.

According to the straddled vehicle having the configuration described in (3), therefore, it is possible to charge the high-charge-acceptance lead-acid battery at high efficiency even at a higher rotation speed of the crankshaft as compared with a configuration in which the number of magnetic pole portions is less than the number of teeth.

(4) The straddled vehicle described in any one of (1) to (3), wherein
the control device executes both the electric power generation control to cause the starter generator receiving torque from the crankshaft to generate electric power for charging the lead-acid battery, and a motoring control to cause the starter generator to motor, using electric power discharged from the lead-acid battery, such that a ratio of the electric power generation control execution period to the motoring control execution period exceeds a lower limit that is set to keep the level of charge of the high-charge-acceptance lead-acid battery above 50%.

According to the configuration described in (4), it is possible to restrict situations in which the level of charge of the high-charge-acceptance lead-acid battery drops to 50% or less. It is therefore possible to charge the high-charge-acceptance lead-acid battery at high efficiency even at a higher rotation speed of the crankshaft.

(5) The straddled vehicle described in any one of (1) to (4), wherein
the control device prohibits the execution of the crankshaft rotation assist control if the level of charge of the high-charge-acceptance lead-acid battery is less than an assist lower limit that is set to a value greater than 50%.

According to the configuration described in (5), it is possible to restrict situations in which the level of charge of the high-charge-acceptance lead-acid battery drops to 50% or less because of the crankshaft rotation assist control. It is therefore possible to charge the high-charge-acceptance lead-acid battery at high efficiency even at a higher rotation speed of the crankshaft.

(6) The straddled vehicle described in any one of (1) to (5), wherein
the control device executes start-stop control to suspend the combustion operation of the engine on condition that a specific start-stop condition is satisfied, and
prohibits the execution of the start-stop control if the level of charge of the high-charge-acceptance lead-acid battery is less than an assist lower limit that is set to a value greater than 50%.

According to the configuration described in (6), it is possible to restrict situations in which the level of charge of the high-charge-acceptance lead-acid battery drops to 50% or less because of the engine start control that follows the start-stop control. It is therefore possible to charge the high-charge-acceptance lead-acid battery at high efficiency even at a higher rotation speed of the crankshaft.

The terminology used herein is for defining particular embodiments only and is not intended to be limiting the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. Terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This description describes a novel straddled vehicle. In the description given below, for the purposes of explanation, a number of specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The straddled vehicle refers to a vehicle of a type including a saddle on which a driver sits astride. Examples of straddled vehicles include scooters, mopeds, off-road motorcycles, and on-road motorcycles. The straddled vehicle is not limited to a motorcycle, and may be, for example, any vehicle such as a motor tricycle or an ATV (All-Terrain Vehicle). The motor tricycle may include two front wheels and one rear wheel, or may include one front wheel and two rear wheels. Preferably, the vehicle is configured to be capable of making a turn in a leaning posture. The vehicle configured to be capable of making a turn in a leaning posture is configured to make a turn in a posture leaning toward the center of a curve. By doing this, the vehicle configured to be capable of making a turn in a leaning posture counteracts centrifugal force acting on the vehicle during the turn. Examples of vehicles configured to be capable of making a turn in a leaning posture include straddled vehicles configured to be capable of making a turn in a leaning posture (for example, motorcycles and motor tricycles). It is desired that the vehicle configured to be capable of making a turn in a leaning posture is agile, and therefore enabling downsizing of the vehicle.

The engine is an internal combustion engine. The engine outputs the energy of combustion operation as rotation of the crankshaft. Examples of engines include four-stroke engines, two-stroke engines, and rotary engines. The engine is, for example, a single-cylinder engine having one cylinder. The engine is not particularly limited, and may be an engine having multiple cylinders.

The starter generator is a rotary electric machine having both a starter motor function and a generator function. The starter generator in the present disclosure has an assist function for applying torque in the rotation direction of the rotating crankshaft. The assist function of the starter generator is typically to apply torque in a direction for increasing the rotation speed of the crankshaft. The assist function of the starter generator may be, for example, to keep the rotation speed of the crankshaft from decreasing during uphill travel. The starter generator in the present disclosure is a fixed-field starter generator. The starter generator has, for example, a plurality of teeth and a plurality of magnetic pole portions, and the number of magnetic pole portions is greater than the number of teeth. However, the starter generator is not particularly limited, and the number of magnetic pole portions thereof may be less than the number of teeth thereof.

The fixed-field starter generator refers to a starter generator in which the magnetic field strength is fixed. The fixed-field starter generator is, for example, a permanent magnet starter generator having a rotor including permanent magnets. By contrast, the variable-field generator refers to a generator in which the magnetic field strength can be varied through external control. The variable-field generator is, for example, an alternator, which has a field winding and in which the magnetic field strength can be varied depending on current flowing through the field winding. In the case of the variable-field generator, for example, it is possible to reduce output electric power by controlling the current flowing through the field winding even in a situation in which the crankshaft is rotating at high speed.

The electric power that is outputted from the fixed-field starter generator simply increases with an increase in the rotation speed thereof during electric power generation. The fixed-field starter generator therefore tends to generate an excessive amount of electric power while the crankshaft is rotating in comparison to the variable-field generator. The amount of electric power generated by the fixed-field starter generator being excessive as compared with the amount of electric power generated by the variable-field generator means that, for example, the amount of electric power generated by the fixed-field starter generator is greater than the amount of electric power generated by the variable-field generator. The amount of electric power generated by the fixed-field starter generator being excessive as compared with the amount of electric power generated by the variable-field generator means that, for example, the amount of electric power generated by the fixed-field starter generator is greater than the amount of electric power generated by the variable-field generator and exceeds the charge acceptance performance of the high-charge-acceptance lead-acid battery.

The control device executes at least an engine start control, a crankshaft rotation assist control, and an electric power generation control. The control device may execute, for example, a control other than the engine start control, the crankshaft rotation assist control, and the electric power generation control. For example, the control device may execute regenerative control. The control device has, for example, a processor that executes programs. The control device is not particularly limited and may include, for example, electronic circuitry without a processor.

In the crankshaft rotation assist control, the control device causes, in a period during which the crankshaft is rotating, the motoring of the starter generator using electric power discharged from the lead-acid battery to apply torque in the rotation direction of the rotating crankshaft, i.e., a forward direction. Applying torque to the crankshaft being stationary is not the crankshaft rotation assist control but the start control. As a result of the crankshaft rotation assist control, for example, the rotation speed of the crankshaft increases.

The high-charge-acceptance lead-acid battery is one that has charge acceptance performance comparable to that of charge-controlled vehicle lead-acid batteries (batteries for charge-controlled vehicles) or start-stop vehicle lead-acid batteries. The high-charge-acceptance lead-acid battery has higher charge acceptance performance than standard automotive lead-acid batteries.

The high-charge-acceptance lead-acid battery has, for example, the following specification. The amount of electric charge accumulated through the following steps is greater than 200 As × the rated capacity / 5 Ah: a step where the high-charge-acceptance lead-acid battery in a fully charged state is discharged at a 10-hour rate current until an amount of electric charge equal to the rated capacity thereof is discharged; subsequently, a step where the high-charge-acceptance lead-acid battery is charged at the 10-hour rate current with an amount of electric charge equal to 70% of the rated capacity × the rated capacity / 5 Ah; subsequently, a step where the high-charge-acceptance lead-acid battery at rest for 20 hours; and subsequently, a step where the high-charge-acceptance lead-acid battery for 60 seconds is charged at a 1/3-hour rate current under 25°C conditions. However, no particular limitations are placed on specifications of the high-charge-acceptance lead-acid battery. The high-charge-acceptance lead-acid battery may have a specification outside the numerical range described above as long as the high-charge-acceptance lead-acid battery has higher charge acceptance performance than standard automotive lead-acid batteries.

The maximum charging voltage of the high-charge-acceptance lead-acid battery is, for example, 18 V. The nominal voltage of the high-charge-acceptance lead-acid battery is, for example, 12 V. The configuration in which the maximum charging voltage of the high-charge-acceptance lead-acid battery is 18 V or the nominal voltage thereof is 12 V can be implemented using a single commercially available charge-controlled vehicle lead-acid battery or start-stop vehicle lead-acid battery. A power source in this configuration is smaller in size than, for example, in a configuration in which two batteries are used to achieve a nominal voltage of 24 V.

As long as the straddled vehicle includes only one high-charge-acceptance lead-acid battery and uses the single high-charge-acceptance lead-acid battery for all of the start control, the crankshaft rotation assist control, and the electric power generation control, it is possible to increase the degree of freedom in assist control while achieving vehicle body downsizing. In a configuration in which the straddled vehicle uses the high-charge-acceptance lead-acid battery as a power source for an electric auxiliary machine, it is possible to achieve further vehicle body downsizing as compared with a configuration in which the straddled vehicle incorporates a dedicated battery for the auxiliary machine.

The standard automotive lead-acid battery is, for example, a starter battery. The standard automotive lead-acid battery has lower charge acceptance performance than the charge acceptance performance of the charge-controlled vehicle lead-acid battery. The standard automotive lead-acid battery has lower charge acceptance performance than the charge acceptance performance of the start-stop vehicle lead-acid battery.

The standard automotive lead-acid battery is, for example, a starter battery as defined in the Japanese Industrial Standard JIS D 5301:2019.

The level of charge refers to a ratio of electric energy stored in the battery to the rated capacity of the battery. The level of charge is usually expressed in %. The level of charge may be referred to as state of charge (SOC). Keeping the level of charge of the high-charge-acceptance lead-acid battery within the operating range that exceeds 50% and encompasses values below 80%% means that the level of charge of the high-charge-acceptance lead-acid battery is greater than 50% both during charging and discharging. The assist lower limit is, for example, the lower limit of the operating range. For example, keeping the level of charge of the high-charge-acceptance lead-acid battery within the operating range that exceeds 50% and encompasses values below 80% means that the high-charge-acceptance lead-acid battery is used in such a manner as to keep the level of charge thereof from dropping to 50% or less both during charging and discharging. For example, keeping the level of charge of the high-charge-acceptance lead-acid battery within the operating range that exceeds 50% and encompasses values below 80% means that the high-charge-acceptance lead-acid battery is used in such a manner so as to avoid situations in which the level of charge thereof drops to 50% or less both during charging and discharging. Levels of charge less than or equal to 50% are not included in the operating range. The operating range may naturally include levels of charge greater than or equal to 80% and less than or equal to 100%.

Examples of configurations in which the number of magnetic pole portions of the fixed-field starter generator is greater than the number of teeth include a configuration in which the number of magnetic pole portions is 4/3 of the number of teeth. However, the present teaching is not particularly limited as such. For example, the number of magnetic pole portions may be greater than the number of teeth and less than 4/3 of the number of teeth. For another example, the number of magnetic pole portions may be greater than 4/3 of the number of teeth.

The present teaching is not particularly limited as such. For example, the number of magnetic pole portions may be less than or equal to the number of teeth.

### Advantageous Effects of Invention

According to the present teaching, it is possible to increase the degree of freedom in assist control while reducing deterioration of the service life of a lead-acid battery in a straddled vehicle.

### Brief Description of Drawings

[FIG. 1] A diagram schematically illustrating a straddled vehicle according to a first embodiment of the present teaching.
[FIG. 2] A graph showing an example of a relationship between the level of charge and the internal resistance characteristics of a high-charge-acceptance lead-acid battery.
[FIG. 3] A cross-sectional view of a fixed-field starter generator according to a third embodiment.
[FIG. 4] A flowchart for describing operation of a control device according to a fourth embodiment.
[FIG. 5] A flowchart for describing operation of a control device according to a fifth embodiment.
[FIG. 6] A flowchart for describing operation of a control device according to a sixth embodiment.

### Description of Embodiments

The following describes the present teaching based on embodiments with reference to the drawings.

### [First Embodiment]

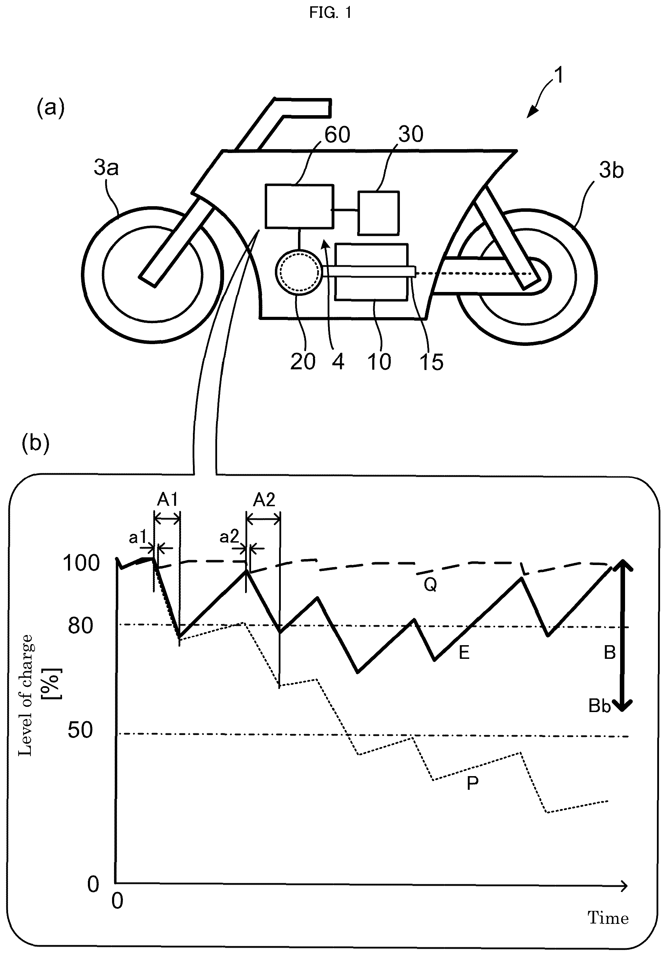

FIG. 1 is a diagram schematically illustrating a straddled vehicle according to a first embodiment of the present teaching. Part (a) of FIG. 1 is a side view of an outline configuration of the straddled vehicle. Part (b) of FIG. 1 is a chart for describing an example of transition of the level of charge.

The straddled vehicle 1 shown in FIG. 1 includes a lead-acid battery 30, a starter generator 20, and a control device 60. More specifically, the straddled vehicle 1 includes an engine 10. The engine 10 has a crankshaft 15. The straddled vehicle 1 also includes wheels 3a and 3b. The straddled vehicle 1 has the wheel 3b as a drive wheel. The engine 10 outputs power from the crankshaft 15 through combustion operation. The power outputted from the crankshaft 15 is transmitted to the wheel 3b serving as the drive wheel.

The starter generator 20 starts the engine 10 by causing rotation of the crankshaft 15 of the engine 10. The starter generator 20 generates electric power through rotation thereof caused by the crankshaft 15.

The starter generator 20 is coupled to the crankshaft 15 at a fixed reduction ratio without a clutch therebetween. Alternatively, the starter generator 20 is fixed to the crankshaft 15 without a clutch therebetween. The starter generator 20 always rotates in conjunction with the rotation of the crankshaft 15. In a configuration in which the starter generator 20 is coupled to the crankshaft 15 at a fixed reduction ratio without a clutch therebetween, for example, the starter generator 20 is coupled to the crankshaft 15 with a reduction gear or a reduction belt and without a clutch therebetween. In this configuration, the starter generator 20 is coupled so as to rotate at the fixed reduction ratio relative to the crankshaft 15. In a configuration in which the starter generator 20 is fixed to the crankshaft 15 without a clutch therebetween, for example, the starter generator 20 is fixed to an end part of the crankshaft 15. In this configuration, the reduction ratio is 1. That is, the starter generator 20 is coupled to the crankshaft 15 so as to rotate at the same speed as the crankshaft 15.

The starter generator 20 is a fixed-field starter generator. Hereinafter, the starter generator 20 according to each embodiment may be also referred to as the fixed-field starter generator 20. The fixed-field starter generator 20 is used to start and assist the engine 10 as well as to provide other assistance. This configuration is therefore smaller in size than, for example, a configuration including a dedicated assist motor. The fixed-field starter generator 20 has a rotor 70 including permanent magnets 77 and is configured to rotate while the crankshaft 15 is rotating. The fixed-field starter generator 20 differs from, for example, a variable-field generator, which has a field winding and in which the magnetic field strength can be varied using current flowing through the field winding. The variable-field generator is, for example, an alternator. The fixed-field starter generator 20 has no field winding, and thus is smaller in size than, for example, an alternator. Unlike in the case of the field winding of the variable-field generator, for example, the strength of the magnetic field generated by the permanent magnets 77 of the fixed-field starter generator 20 is fixed. The strength of the magnetic field is, for example, set so that the fixed-field starter generator 20 can output sufficient power for starting the engine 10. In the case of the fixed-field starter generator 20, the strength of the magnetic field cannot be reduced through electrical control. In other words, the strength of the magnetic field cannot be reduced even in a situation in which the fixed-field starter generator 20 is rotating at high speed. The fixed-field starter generator 20 is therefore tending to generate an excessive amount of electric power while the crankshaft 15 is rotating in comparison to the variable-field generator.

The lead-acid battery 30 is a high-charge-acceptance lead-acid battery. Hereinafter, the lead-acid battery 30 according to each embodiment may be also referred to as the high-charge-acceptance lead-acid battery 30. The high-charge-acceptance lead-acid battery 30 has higher charge acceptance performance than a standard automotive lead-acid battery. The high-charge-acceptance lead-acid battery 30 has charge acceptance performance comparable to a charge-controlled vehicle lead-acid battery or a start-stop vehicle lead-acid battery. As such, although a portion of electric power generated by the fixed-field starter generator 20 while the crankshaft 15 is rotating was considered excessive in conventional technologies, the high-charge-acceptance lead-acid battery 30 can accept such a portion. It should be noted that the charge-controlled vehicle lead-acid battery is a lead-acid battery originally designed to be charged using electric power generated under control via variation of the magnetic field of an automotive variable-field generator.

The high-charge-acceptance lead-acid battery 30 is, for example, configured to have lower internal resistance than a standard automotive lead-acid battery at least when fully charged. The charge acceptance performance of the high-charge-acceptance lead-acid battery 30 is, for example, increased by employing a carbon black-containing material as a negative active material of a negative plate. Carbon black contained in the negative active material helps prevent lead sulfate from accumulating in the negative active material. Lead sulfate is not easily reduced. The high-charge-acceptance lead-acid battery 30 has high charge acceptance performance because lead sulfate, which is not easily reduced, is prevented from accumulating in the negative active material. Furthermore, lead sulfate is prevented from accumulating in the negative active material even in a situation in which the high-charge-acceptance lead-acid battery 30 is charged at a high current. It is therefore possible to charge the high-charge-acceptance lead-acid battery 30 at a high current while reducing deterioration of the service life thereof.

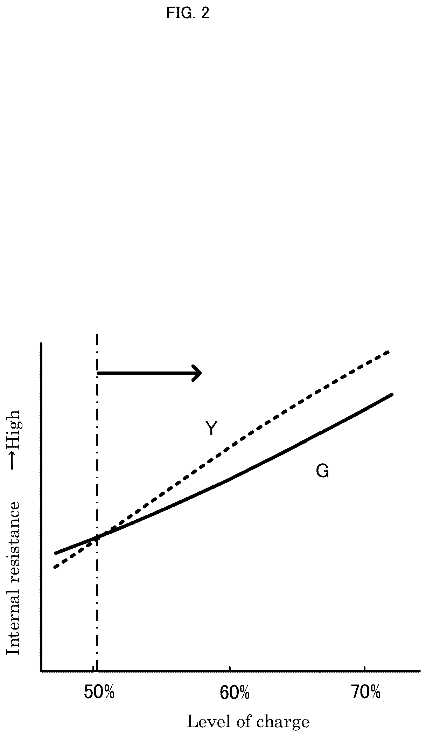

FIG. 2 is a graph showing an example of a relationship between the level of charge and the internal resistance characteristics of a high-charge-acceptance lead-acid battery.

A solid line in FIG. 2 represents internal resistance G of an example of the high-charge-acceptance lead-acid battery 30. A dashed line represents, as a comparative example, internal resistance Y of a standard automotive lead-acid battery having a capacity equivalent to that of the high-charge-acceptance lead-acid battery 30. The internal resistance is calculated from results of current measured per unit time. The lower the internal resistance, the higher the charge acceptance performance.

As shown in the graph in FIG. 2, the internal resistance G of the high-charge-acceptance lead-acid battery 30 is lower than the internal resistance Y of the standard automotive lead-acid battery in a region where the level of charge is greater than 50%. That is, in the region where the level of charge is greater than 50%, the high-charge-acceptance lead-acid battery 30 exhibits higher charge acceptance performance than the standard automotive lead-acid battery.

However, in a region where the level of charge is less than or equal to 50%, the internal resistance G of the high-charge-acceptance lead-acid battery 30 is higher than the internal resistance Y of the standard automotive lead-acid battery. This is considered because the high-charge-acceptance lead-acid battery 30 is configured to have charge acceptance performance that exhibits variability so that high charge acceptance performance is obtained in a specific region, while maintaining a capacity equivalent to that of the standard automotive lead-acid battery.

The control device 60 shown in FIG. 1 is provided in an electrical path 4 that electrically connects the high-charge-acceptance lead-acid battery 30 and the fixed-field starter generator 20. The control device 60 executes at least an engine start control, a crankshaft rotation assist control, and an electric power generation control. The control device 60 has, for example, a processor that executes programs and a storage device that stores therein the programs and data. The control device 60 executes the engine start control electric power generation control, the crankshaft rotation assist control, and the electric power generation control through execution of a program.

The engine start control is control to start the engine 10. In the engine start control, the control device 60 applies torque to the crankshaft 15 of the engine 10 that is not in combustion operation by causing motoring of the fixed-field starter generator 20 using electric power discharged from the high-charge-acceptance lead-acid battery 30. Through this control, the engine 10 starts.

The crankshaft rotation assist control is control to apply torque in the rotation direction of the crankshaft 15 of the engine 10 in combustion operation by causing the motoring of the fixed-field starter generator 20 using electric power discharged from the high-charge-acceptance lead-acid battery 30. Through this control, for example, it is possible to increase the rotation speed of the crankshaft 15 or keep the rotation speed of the crankshaft 15 from decreasing during uphill travel, for example.

The electric power generation control is control to cause the fixed-field starter generator 20 receiving torque from the crankshaft 15 to generate electric power. The high-charge-acceptance lead-acid battery 30 is charged using the electric power generated by the fixed-field starter generator 20.

The control device 60 controls the motoring and the electric power generation of the fixed-field starter generator 20 in a situation in which the crankshaft rotation assist control and the electric power generation control are each executed multiple times in a period during which the crankshaft 15 is rotating. The control device 60 controls the motoring and the electric power generation of the fixed-field starter generator 20 in such a manner as to keep the level of charge of the high-charge-acceptance lead-acid battery 30 within an operating range B that exceeds 50% in the period described above. The operating range B is set up to a level of charge less than 80%. More specifically, the operating range B is set to cover both levels of charge less than 80% and levels of charge greater than 80%. The control device 60 controls the motoring and the electric power generation so that the high-charge-acceptance lead-acid battery 30 can be used even when the level of charge is less than 80%.

An example of control methods that can be employed involves controlling a period during which the motoring of the fixed-field starter generator 20 is caused and a period during which the high-charge-acceptance lead-acid battery 30 is charged so that the ratio of the latter period to the former is greater than a lower limit. Another example of control methods that can be employed involves directly or indirectly acquiring the level of charge of the high-charge-acceptance lead-acid battery 30, and prohibiting the motoring of the fixed-field starter generator 20 if the level of charge is less than an assist lower limit Bb. Another example of control methods that can be employed involves both the method involving controlling the control period ratio and the method involving prohibiting the motoring depending on the level of charge.

The level of charge of the high-charge-acceptance lead-acid battery 30 is kept within the operating range B that exceeds 50%. This makes it possible to maintain the charge acceptance performance of the high-charge-acceptance lead-acid battery 30, which is charged using electric power generated by the fixed-field starter generator 20, higher than the charge acceptance performance of a standard automotive lead-acid battery having a comparable capacity. Thus, the high-charge-acceptance lead-acid battery 30 achieves a reduction in the amount of electric power to be wasted from the electric power supplied by the fixed-field starter generator 20.

Thus, it is possible to charge the high-charge-acceptance lead-acid battery 30 that has been discharged for a motor assist with a larger amount of electric power than in the case of a standard automotive lead-acid battery, while reducing deterioration of the service life thereof.

A solid line E in the graph in Part (b) of FIG. 1 represents an example of change in the level of charge of the high-charge-acceptance lead-acid battery 30 according to the present embodiment. A dashed line P represents an example of change in the level of charge of a standard automotive lead-acid battery, which is a comparative example.

In the examples shown in the graph in Part (b) of FIG. 1, the engine start control is executed at time 0. The level of charge decreases through the engine start control. Thereafter, the crankshaft rotation assist control is executed during periods A1, A2, and so on while the crankshaft 15 is rotating. The level of charge decreases also through the crankshaft rotation assist control. There is no substantial difference in amount of decrease in the level of charge through the crankshaft rotation assist control between the high-charge-acceptance lead-acid battery 30 and the standard automotive lead-acid battery.

Outside the execution periods of the crankshaft rotation assist control, the level of charge increases through charging control. Since the high-charge-acceptance lead-acid battery 30 according to the present embodiment has higher charge acceptance performance than the standard automotive lead-acid battery, the amount of increase in the level of charge per unit time through the charging control is greater in the high-charge-acceptance lead-acid battery 30.

As indicated by the dashed line P, the amount of increase in the level of charge per unit time through the charging control is smaller in the standard automotive lead-acid battery. A portion of electric power that is not used for the charging is wasted. If the crankshaft rotation assist control and the charging control are executed multiple times, the level of charge of the standard automotive lead-acid battery can drop excessively, as indicated by the dashed line P. Excessive drop in the level of charge leads to deterioration of the service life of the standard automotive lead-acid battery.

In order to keep the level of charge of the standard automotive lead-acid battery from dropping excessively, for example, a method may be employed that involves shortening the execution periods of the crankshaft rotation assist control. A dashed line Q represents change in the level of charge of the standard automotive lead-acid battery in an example in which the execution periods of the crankshaft rotation assist control are shortened. The crankshaft rotation assist control is initiated in response to the state of travel or a rider's operation. It is therefore impossible to predict in advance when the crankshaft rotation assist control is initiated. In order to keep the level of charge from excessively dropping due to the small amount of increase through the charging while preparing for the crankshaft rotation assist control that cannot be predicted in advance, it is required to keep the standard automotive lead-acid battery in standby at a level of charge that is substantially close to full. As a result, the periods of the crankshaft rotation assist control are shortened as indicated by a1, a2, and so on.

By contrast, the high-charge-acceptance lead-acid battery 30, which has higher charge acceptance performance, can accept a larger amount of current from the fixed-field starter generator 20, accepting current that is considered unacceptable and excessive, and is likely to be wasted as heat or the like in the case of the standard automotive lead-acid battery. That is, the high-charge-acceptance lead-acid battery 30 is charged by efficiently utilizing a large amount of electric power generated by the fixed-field starter generator 20. For example, slopes of the solid line E, which indicate the amount of increase during respective periods of the electric power generation control, in the graph shown in Part (b) of FIG. 1 are steeper. As a result, the high-charge-acceptance lead-acid battery 30 is rechargeable within a shorter period of time. It is therefore possible to increase the assist duration, the number of motor assists, or the assist force as compared with the standard automotive lead-acid battery, while reducing deterioration of the service life of the high-charge-acceptance lead-acid battery 30. That is, it is possible to increase either or both of the number of motor assists and the assist force. This means that both settings for increasing the number of motor assists or the assist force and settings for decreasing the number of motor assists or the assist force are possible in designing the straddled vehicle 1 depending on, for example, the specifications of the vehicle.

Furthermore, the motoring and the electric power generation of the fixed-field starter generator 20 are controlled in such a manner as to keep the level of charge of the high-charge-acceptance lead-acid battery 30 within the operating range B. The operating range B is within a range of levels of charge that exceeds 50%. The operating range B also includes a range of levels of charge that is below 80%.

It is possible to further increase the charge acceptance performance of the high-charge-acceptance lead-acid battery 30 by controlling the level of charge of the high-charge-acceptance lead-acid battery 30 within the operating range B. Thus, it is possible to reduce deterioration of the service life of the high-charge-acceptance lead-acid battery. According to the straddled vehicle 1, therefore, it is possible to increase the degree of freedom in assist control while achieving vehicle body downsizing, and while also reducing deterioration of the service life of the high-charge-acceptance lead-acid battery 30.

### [Second Embodiment]

A high-charge-acceptance lead-acid battery 30 according to the present embodiment has a specific charge-discharge characteristic. The specific charge-discharge characteristic is that an amount of electric charge accumulated through the following charging steps is greater than a reference: discharging the high-charge-acceptance lead-acid battery 30 in a fully charged state; subsequently charging the high-charge-acceptance lead-acid battery 30 up to a reference electric charge level; and subsequently rapidly charging the high-charge-acceptance lead-acid battery 30 over a rapid charging test period.

More specifically, the high-charge-acceptance lead-acid battery 30 is, for example, determined to have the specific charge-discharge characteristic through the following steps.
- First, discharge the high-charge-acceptance lead-acid battery 30 in a fully charged state at a 10-hour rate current until an amount of electric charge equal to the rated capacity of the high-charge-acceptance lead-acid battery 30 is discharged.
- Subsequently, charge the high-charge-acceptance lead-acid battery 30 at the 10-hour rate current with an amount of electric charge equal to 70% of the rated capacity × the rated capacity / 5 Ah.
- Subsequently, leave the high-charge-acceptance lead-acid battery 30 at rest for 20 hours.
- Subsequently, rapidly charge the high-charge-acceptance lead-acid battery 30 for 60 seconds at a 1/3-hour rate current under 25°C conditions, and confirm that the amount of electric charge accumulated is greater than 200 As × the rated capacity / 5 Ah.

According to the configuration of the present embodiment, for example, it is possible to easily select a high-charge-acceptance lead-acid battery 30 using, as an indicator, the characteristic based on the amount of electric charge accumulated through charging, which is determined by the specific measurement method described above. Furthermore, by performing control so that the high-charge-acceptance lead-acid battery 30 selected based on this measurement method is used in such a manner as to keep the level of charge at a level greater than 50%, it is possible to increase the degree of freedom in assist control while reducing deterioration of the service life of the high-charge-acceptance lead-acid battery 30.

Elements of the present embodiment other than those described above are common to the first embodiment. Accordingly, the elements common to the first embodiment are assigned the same reference signs as in the first embodiment, and description thereof is omitted.

### [Third Embodiment]

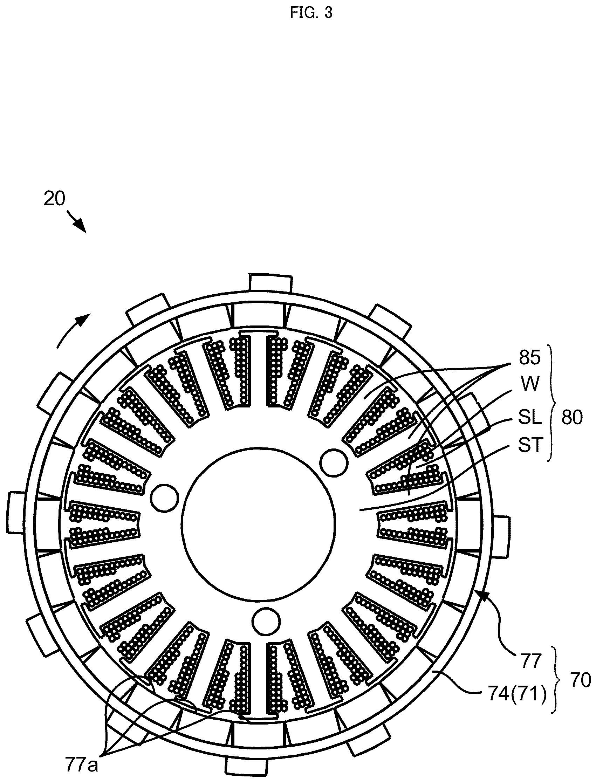

FIG. 3 is a cross-sectional view of a fixed-field starter generator according to a third embodiment.

The fixed-field starter generator 20 shown in FIG. 3 has the rotor 70 and the stator 80. The rotor 70 always rotates in conjunction with the rotation of the crankshaft 15.

The rotor 70 has a plurality of magnetic pole portions 77a. The plurality of magnetic pole portions 77a are formed by the permanent magnets 77. The plurality of magnetic pole portions 77a are provided on an inner circumferential surface of a back yoke portion 74. The permanent magnets 77 are provided as a plurality of permanent magnets 77. However, the plurality of magnetic pole portions 77a may be formed by a single annular permanent magnet. The plurality of magnetic pole portions 77a are provided such that N pole and S pole appear alternately in a circumferential direction of the fixed-field starter generator 20. In the example shown in FIG. 3, the number of magnetic pole portions 77a of the rotor 70 that face the stator 80 is 24. The number of magnetic poles of the rotor 70 refers to the number of magnetic poles that face the stator 80. No magnetic material is provided between the magnetic pole portions 77a and the stator 80.

The plurality of magnetic pole portions 77a are located further outward than the stator 80 in a radial direction of the fixed-field starter generator 20.

The stator 80 has a stator core ST and a plurality of windings W. The stator core ST has a plurality of teeth (tooth portions) 85 arranged at intervals in the circumferential direction. The plurality of teeth 85 integrally extend from the stator core ST radially toward the outside. In the example shown in FIG. 3, 18 teeth 85 in total are arranged at intervals in the circumferential direction. In other words, the stator core ST has 18 slots SL in total that are arranged at intervals in the circumferential direction. The windings W are wound around the respective teeth 85. That is, the windings W, which are multi-phase windings, are disposed through the slots SL.

The number of magnetic pole portions 77a included in the rotor 70 is greater than the number of teeth 85. In the example shown in FIG. 3, the number of magnetic pole portions 77a is 4/3 of the number of teeth 85.

An electrical angular velocity with respect to the rotation speed of the rotor 70 in the fixed-field starter generator 20 is, for example, higher than an electrical angular velocity in a configuration in which the number of magnetic pole portions 77a is less than the number of teeth.

The electrical angular velocity is a rate of change of electrical angle, which is defined based on the periodic repetition of magnetic poles, the N and S poles, accompanying the rotation speed of the rotor 70. The windings W exhibit higher electrical impedance at a higher electrical angular velocity. This is because the impedance of the windings W is correlated with ((ωL)² + R²)^{1/ 2}, where R is the electrical resistance of the windings W, L is the inductance of the windings W, and ω is the electrical angular velocity of the rotor 70. The electrical angular velocity further increases with an increase in the rotation speed of the rotor 70. The impedance of the windings W interferes with current flowing through the windings W. The induced voltage increases with an increase in the rotation speed of the rotor 70. In this case, excessive current output from the fixed-field starter generator 20 is reduced.

The fixed-field starter generator 20 can therefore charge the high-charge-acceptance lead-acid battery 30 at high efficiency under a condition of high rotation speed of the crankshaft 15 as compared with, for example, a configuration in which the number of magnetic pole portions is less than the number of teeth.

Elements of the present embodiment other than those described above are common to the first embodiment. Accordingly, the elements common to the first embodiment are assigned the same reference signs as in the first embodiment, and description thereof is omitted.

### [Fourth Embodiment]

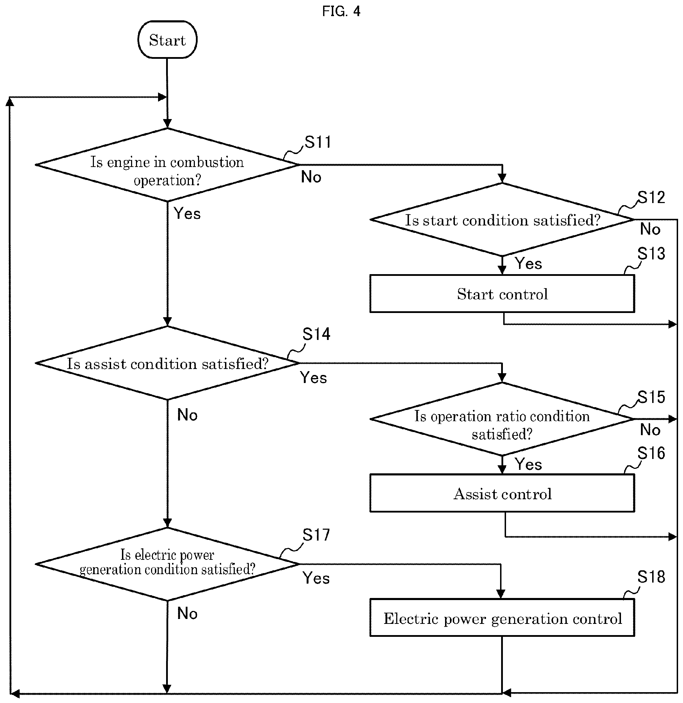

FIG. 4 is a flowchart for describing operation of a control device according to a fourth embodiment.

If the engine 10 is not in combustion operation (No in S11), and a start condition for the engine 10 is satisfied (Yes in S12), the control device 60 executes the engine start control (S13). The control device 60 determines whether or not the engine 10 is in combustion operation using, for example, an output signal from a rotation sensor, not shown, that detects the rotation of the crankshaft 15 or the rotor 70 of the fixed-field starter generator 20. The start condition for the engine 10 is, for example, satisfied by a rider operating a start switch. The start condition for the engine 10 is, for example, also satisfied by a rider operating an accelerator grip when the straddled vehicle 1 is in an engine-off state under start-stop control. In the engine start control (S13), the control device 60 causes the motoring of the fixed-field starter generator 20 using electric power discharged from the high-charge-acceptance lead-acid battery 30 and applies torque to the crankshaft 15 being stationary. The control device 60 also records the execution period of the engine start control.

If the engine 10 is in combustion operation (Yes in S11), and an assist condition is satisfied (Yes in S14), and an operation ratio condition is satisfied (Yes in S15), the control device 60 executes the crankshaft rotation assist control (S16). The control device 60 determines whether or not the assist condition is satisfied using, for example, an output signal from an accelerator sensor that detects at least operation of the accelerator grip, not shown. The assist condition may include, for example, the rotation speed of the engine 10 or the speed of the straddled vehicle 1. The operation ratio condition (S15) will be described below. In the crankshaft rotation assist control (S16), the control device 60 causes the motoring of the fixed-field starter generator 20 using electric power discharged from the high-charge-acceptance lead-acid battery 30. Thus, the control device 60 applies torque in the rotation direction of the rotating crankshaft 15. The control device 60 records the execution period of the crankshaft rotation assist control.

If the engine 10 is in combustion operation (Yes in S11), and the assist condition is not satisfied (No in S14), and an electric power generation condition is satisfied (Yes in S17), the control device 60 executes the electric power generation control (S18). The control device 60 determines whether or not the electric power generation condition is satisfied based on, for example, the rotation speed of the crankshaft 15 and the voltage of the high-charge-acceptance lead-acid battery 30. In the electric power generation control (S18), the control device 60 causes the fixed-field starter generator 20 receiving torque from the crankshaft 15 to generate electric power. The high-charge-acceptance lead-acid battery 30 is charged using the electric power generated. The control device 60 records the execution period of the electric power generation control.

The operation ratio condition is based on whether or not the ratio of the execution period of the electric power generation control (S18) to the execution period of the control (S13, S16) to cause the motoring of the fixed-field starter generator 20 using electric power discharged from the high-charge-acceptance lead-acid battery 30 is greater than a predetermined lower limit. The lower limit is set so that the high-charge-acceptance lead-acid battery is used in such a manner as to keep the level of charge thereof within the operating range B. The operating range B is set to be a range of levels of charge greater than 50% and to include a range of levels of charge less than 80%. The lower limit is, for example, obtained from measurement results of a repeated charging-discharging test performed on the high-charge-acceptance lead-acid battery 30 under various conditions.

For example, if the ratio of the execution period of the electric power generation control (S18) is less than or equal to the lower limit, the operation ratio condition is not satisfied (No in S15), and the execution of the assist control (S16) is prohibited.

According to the present embodiment, it is possible to reduce situations in which the level of charge of the high-charge-acceptance lead-acid battery 30 drops to 50% or less.

If the ratio of the execution period of the electric power generation control (S18) to the execution period of the control (S13, S16) to cause the motoring of the fixed-field starter generator 20 is less than or equal to the lower limit, the execution of the assist control (S16) is prohibited, but the execution of the start control (S13) is not prohibited. Thus, even if the high-charge-acceptance lead-acid battery 30 cannot be charged at high efficiency, it is possible to reduce situations in which the engine 10 cannot be started.

### [Fifth Embodiment]

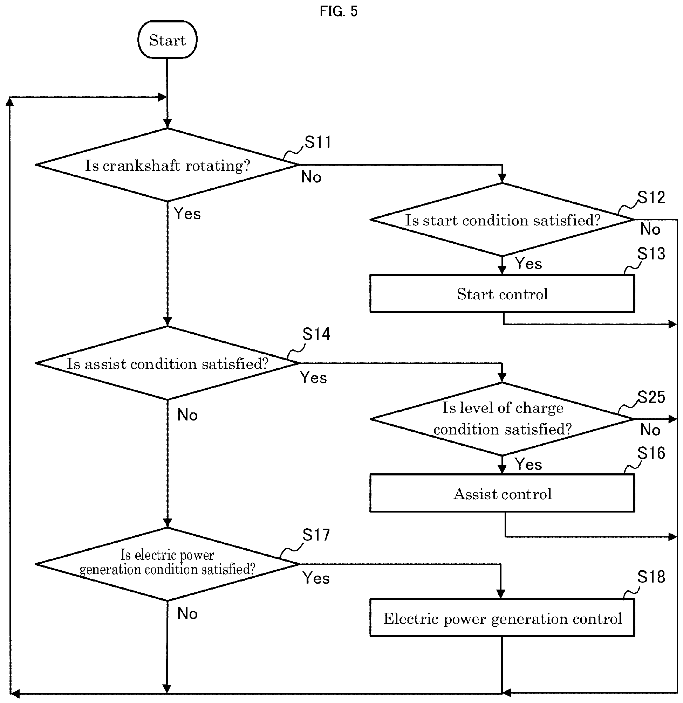

FIG. 5 is a flowchart for describing operation of a control device according to a fifth embodiment.

The flowchart in FIG. 5 differs in that the control device 60 determines whether or not a charge condition is satisfied (S25) instead of the operation ratio condition (S15) in the flowchart in FIG. 4.

The control device 60 according to the present embodiment prohibits the execution of the start-stop control if the level of charge of the high-charge-acceptance lead-acid battery 30 is less than the assist lower limit Bb (see Part (b) of FIG. 1). The control device 60 obtains, for example, the level of charge from results of detection of output voltage and output current of the high-charge-acceptance lead-acid battery 30 that is performed during the execution of the start-stop control (S33) or the start control (S13). However, no particular limitations are placed on the method for obtaining the level of charge. For example, the control device 60 may obtain the level of charge from output voltage detected when the high-charge-acceptance lead-acid battery 30 is not supplying electric power to the fixed-field starter generator 20. Alternatively, the control device 60 may obtain the level of charge from the accumulated input and output current of the high-charge-acceptance lead-acid battery 30.

The control device 60 determines that the charge condition is not satisfied (No in S25) and prohibits the execution of the crankshaft rotation assist control (S16) if the level of charge of the high-charge-acceptance lead-acid battery 30 is less than the assist lower limit Bb in Step S25. The assist lower limit Bb is set to a value greater than 50%.

According to the present embodiment, it is possible to reduce situations in which the level of charge of the high-charge-acceptance lead-acid battery 30 drops to 50% or less because of the crankshaft rotation assist control (S16). It is therefore possible to charge the high-charge-acceptance lead-acid battery 30 at high efficiency even at a higher rotation speed of the crankshaft 15.

Furthermore, according to the present embodiment, the execution of the assist control (S16) is prohibited if the level of charge of the high-charge-acceptance lead-acid battery 30 is less than the assist lower limit Bb, but the execution of the start control (S13) is not prohibited. Thus, even if the high-charge-acceptance lead-acid battery 30 cannot be charged at high efficiency, it is possible to reduce situations in which the engine 10 cannot be started.

Elements of the present embodiment other than those described above are common to the fourth embodiment. Accordingly, the elements common to the fourth embodiment are assigned the same reference signs as in the fourth embodiment, and description thereof is omitted.

### [Sixth Embodiment]

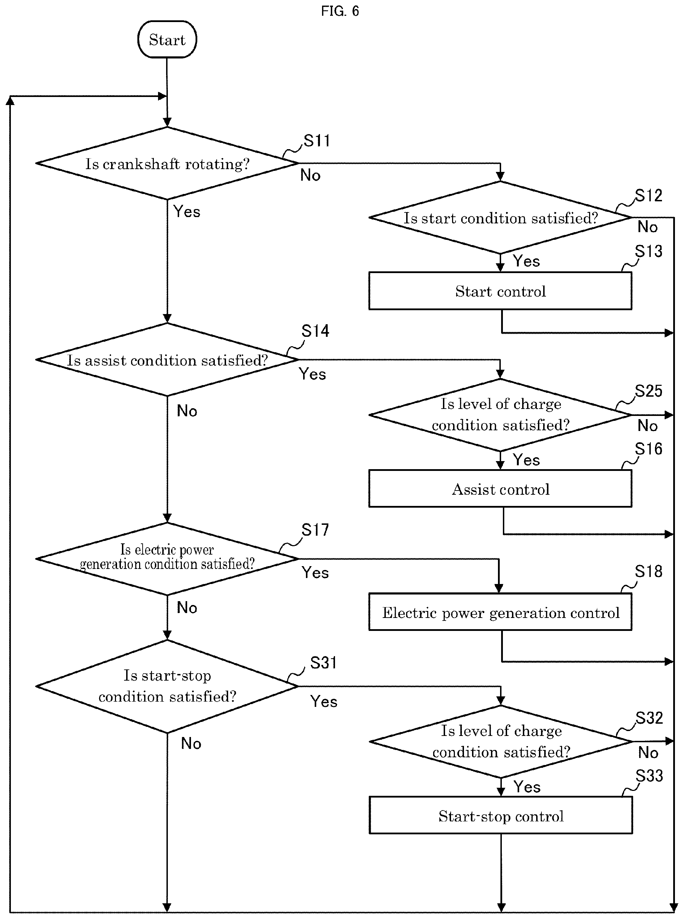

FIG. 6 is a flowchart for describing operation of a control device according to a sixth embodiment.

The flowchart in FIG. 6 differs from the flowchart in FIG. 5 in that the former additionally includes Steps S31, S32, and S33.

The control device 60 according to the present embodiment executes the start-stop control (S33) if the crankshaft 15 is rotating (Yes in S11), and a start-stop condition is satisfied (Yes in S31), and the charge condition is satisfied (Yes in S32). The start-stop condition is, for example, that the straddled vehicle 1 has stopped traveling. Through the start-stop control (S33), the combustion operation of the engine 10 is suspended and the rotation of the crankshaft 15 is stopped. The start-stop control (S33) puts the straddled vehicle 1 into an engine-off state. The engine 10 in an off state under the start-stop control is started if the start condition is satisfied (Yes in S12). The control device 60 prohibits the execution of the start-stop control (S33) if the level of charge of the high-charge-acceptance lead-acid battery 30 is less than the assist lower limit Bb (No in S32).

According to the present embodiment, it is possible to reduce situations in which the level of charge of the high-charge-acceptance lead-acid battery 30 drops to 50% or less because of the engine start control (S13) that follows the start-stop control (S33).

Furthermore, according to the present embodiment, the execution of the start-stop control (S33) is prohibited if the level of charge of the high-charge-acceptance lead-acid battery 30 is less than the assist lower limit Bb, but the execution of the start control (S13) is not prohibited. Thus, even if the high-charge-acceptance lead-acid battery 30 cannot be charged at high efficiency, it is possible to reduce situations in which the engine 10 cannot be started.

Elements of the present embodiment other than those described above are common to the fifth embodiment. Accordingly, the elements common to the fifth embodiment are assigned the same reference signs as in the fifth embodiment, and description thereof is omitted.

In the fourth to sixth embodiments described above, the execution of the assist control or the execution of the start-stop control is prohibited, but the execution of the start control is not prohibited. However, no particular limitations are placed on the controls. For example, the execution of the start control may be prohibited when the execution of the assist control or the execution of the start-stop control is prohibited. In this case, it is possible to keep the level of charge of the high-charge-acceptance lead-acid battery 30 from dropping more effectively.

The controls based on the level of charge in the fifth embodiment or the sixth embodiment described above may be combined with the operation ratio condition in the third embodiment as a weighted condition. Furthermore, the techniques of the first to sixth embodiments may be combined with the first embodiment. Furthermore, any of the following combinations of embodiments may be combined with the first embodiment.

The second embodiment pertaining to the specific charge-discharge characteristic and the third embodiment pertaining to the configuration in which the number of magnetic pole portions is greater than the number of teeth. The second embodiment pertaining to the specific charge-discharge characteristic and the fourth embodiment pertaining to the operation ratio condition. The second embodiment pertaining to the specific charge-discharge characteristic and the fifth embodiment pertaining to the level of charge. The second embodiment pertaining to the specific charge-discharge characteristic and the sixth embodiment pertaining to the prohibition of the start-stop control. The third embodiment pertaining to the configuration in which the number of magnetic pole portions is greater than the number of teeth and the fourth embodiment pertaining to the operation ratio condition. The third embodiment pertaining to the configuration in which the number of magnetic pole portions is greater than the number of teeth and the fifth embodiment pertaining to the level of charge. The third embodiment pertaining to the configuration in which the number of magnetic pole portions is greater than the number of teeth and the sixth embodiment pertaining to the prohibition of the start-stop control. The fourth embodiment pertaining to the operation ratio condition and the fifth embodiment pertaining to the level of charge. The fourth embodiment pertaining to the operation ratio condition and the sixth embodiment pertaining to the prohibition of the start-stop control. The second embodiment pertaining to the specific charge-discharge characteristic, the third embodiment pertaining to the configuration in which the number of magnetic pole portions is greater than the number of teeth, and the fourth embodiment pertaining to the operation ratio condition. The second embodiment pertaining to the specific charge-discharge characteristic, the third embodiment pertaining to the configuration in which the number of magnetic pole portions is greater than the number of teeth, and the fifth embodiment pertaining to the level of charge. The second embodiment pertaining to the specific charge-discharge characteristic, the third embodiment pertaining to the configuration in which the number of magnetic pole portions is greater than the number of teeth, and the sixth embodiment pertaining to the prohibition of the start-stop control. The second embodiment pertaining to the specific charge-discharge characteristic, the fourth embodiment pertaining to the operation ratio condition, and the fifth embodiment pertaining to the level of charge. The second embodiment pertaining to the specific charge-discharge characteristic, the fourth embodiment pertaining to the operation ratio condition, and the sixth embodiment pertaining to the prohibition of the start-stop control. The second embodiment pertaining to the specific charge-discharge characteristic, the third embodiment pertaining to the configuration in which the number of magnetic pole portions is greater than the number of teeth, the fourth embodiment pertaining to the operation ratio condition, and the fifth embodiment pertaining to the level of charge. The second embodiment pertaining to the specific charge-discharge characteristic, the third embodiment pertaining to the configuration in which the number of magnetic pole portions is greater than the number of teeth, the fourth embodiment pertaining to the operation ratio condition, and the sixth embodiment pertaining to the prohibition of the start-stop control.

### Reference Signs List

1: straddled vehicle
4: electrical path
10: engine
15: crankshaft
20: fixed-field starter generator (starter generator)
30: high-charge-acceptance lead-acid battery (lead-acid battery)
60: control device
70: rotor
77: permanent magnet
77a: magnetic pole portion
80: stator
85: tooth
SL: slot
ST: stator core
W: winding

## Claims

1. A straddled vehicle comprising:
a lead-acid battery;
an engine having a crankshaft and configured to cause rotation of the crankshaft through combustion operation;
a starter generator configured to start the engine by causing rotation of the crankshaft of the engine and to generate electric power through rotation thereof caused by the crankshaft; and
a control device provided in an electrical path that electrically connects the lead-acid battery and the starter generator, and configured to execute at least an engine start control, a crankshaft rotation assist control, and an electric power generation control, the engine start control being a control to start the engine by causing motoring of the starter generator using electric power discharged from the lead-acid battery and applying torque to the crankshaft in a period during which the engine is not in combustion operation, the crankshaft rotation assist control being a control to apply torque in a rotation direction of the rotating crankshaft by causing the motoring of the starter generator using electric power discharged from the lead-acid battery while the engine is in combustion operation, the electric power generation control being a control to cause the starter generator that is receiving torque from the crankshaft to generate electric power for charging the lead-acid battery, wherein
the starter generator is a fixed-field starter generator coupled to the crankshaft at a fixed reduction ratio without a clutch therebetween or fixed to the crankshaft without a clutch therebetween, having a rotor including permanent magnets and configured to rotate while the crankshaft is rotating, and tending to generate an excessive amount of electric power while the crankshaft is rotating in comparison to variable-field generators,
the lead-acid battery is a high-charge-acceptance lead-acid battery that has charge acceptance performance comparable to that of either charge-controlled vehicle lead-acid batteries or start-stop vehicle lead-acid batteries, either of which being designed to be charged with electric power generated under control by varying a magnetic field of variable-field generators, so as to be capable of accepting electric power generated by the fixed-field starter generator, which tends to generate an excessive amount of electric power while the crankshaft is rotating, and
the control device controls the motoring and the electric power generation of the fixed-field starter generator such that, when the crankshaft rotation assist control that causes the motoring of the fixed-field starter generator using electric power discharged from the high-charge-acceptance lead-acid battery and the electric power generation control that charges the high-charge-acceptance lead-acid battery using electric power generated through rotation of the permanent magnets caused by the crankshaft are each executed multiple times in a period during which the engine is in combustion operation, a level of charge of the high-charge-acceptance lead-acid battery remains within an operating range that exceeds 50% and encompasses values below 80%.

2. The straddled vehicle according to claim 1, wherein
the high-charge-acceptance lead-acid battery has a specific charge-discharge characteristic,
the specific charge-discharge characteristic is that an amount of electric charge accumulated through the following steps is greater than 200 As × the rated capacity / 5 Ah: a step where the high-charge-acceptance lead-acid battery in a fully charged state is discharged at a 10-hour rate current until an amount of electric charge equal to the rated capacity of the high-charge-acceptance lead-acid battery is discharged; subsequently, a step where the high-charge-acceptance lead-acid battery is charged at the 10-hour rate current with an amount of electric charge equal to 70% of the rated capacity × the rated capacity / 5 Ah; subsequently, a step where the high-charge-acceptance lead-acid battery is left at rest for 20 hours; and subsequently, a step where the high-charge-acceptance lead-acid battery is, for 60 seconds, charged at a 1/3-hour rate current under 25°C conditions, and
the control device controls the motoring and the electric power generation of the fixed-field starter generator such that, when the crankshaft rotation assist control and the electric power generation control are each executed multiple times, the level of charge of the high-charge-acceptance lead-acid battery having the specific charge-discharge characteristic remains within the operating range that exceeds 50% and encompasses values below 80%.

3. The straddled vehicle according to claim 1 or 2, wherein
the fixed-field starter generator includes a stator that has a stator core having a plurality of slots and windings disposed through the slots, the stator core having a plurality of teeth arranged at intervals in a circumferential direction of the fixed-field starter generator,
the rotor has a plurality of magnetic pole portions formed by the permanent magnets, and
the number of the plurality of magnetic pole portions is greater than the number of the plurality of teeth.

4. The straddled vehicle according to any one of claims 1 to 3, wherein
the control device executes both the electric power generation control to cause the starter generator receiving torque from the crankshaft to generate electric power for charging the lead-acid battery, and a motoring control to cause the starter generator to motor, using electric power discharged from the lead-acid battery, such that a ratio of the electric power generation control execution period to the motoring control execution period exceeds a lower limit that is set to keep the level of charge of the high-charge-acceptance lead-acid battery above 50%.

5. The straddled vehicle according to any one of claims 1 to 4, wherein
the control device prohibits the execution of the crankshaft rotation assist control if the level of charge of the high-charge-acceptance lead-acid battery is less than an assist lower limit that is set to a value greater than 50%.

6. The straddled vehicle according to any one of claims 1 to 5, wherein
the control device executes a start-stop control to suspend the combustion operation of the engine on condition that a specific start-stop condition is satisfied, and
prohibits the execution of the start-stop control if the level of charge of the high-charge-acceptance lead-acid battery is less than an assist lower limit that is set to a value greater than 50%.
